# EUROPEAN PATENT SPECIFICATION

(11) **EP 3 038 953 B1**
(45) Date of publication and mention of the grant of the patent: **22.07.2020**
(21) Application number: 14781311.7
(22) Date of filing: 27.08.2014
(51) Int. Cl.: B65G 17/40, B65G 43/02

(54) **CONVEYOR MODULE, CONVEYOR MAT OR CHAIN, METHOD FOR MONITORING WEAR OF A CONVEYOR ELEMENT, AND CONVEYOR SYSTEM**
FÖRDERMODUL, FÖRDERMATTE ODER KETTE, VERFAHREN ZUR ÜBERWACHUNG DES VERSCHLEISSES EINES FÖRDERELEMENTS UND FÖRDERSYSTEM
MODULE TRANSPORTEUR, TAPIS TRANSPORTEUR OU CHAÎNE TRANSPORTEUSE, PROCÉDÉ DE CONTRÔLE DE L'USURE D'UN ÉLÉMENT DE TRANSPORT, ET SYSTÈME TRANSPORTEUR

(30) Priority: 27.08.2013 NL 2011341; 07.05.2014 NL 2012774
(43) Date of publication of application: 06.07.2016
(73) Proprietor: Rexnord FlatTop Europe B.V., 2691 GV 's-Gravenzande (NL)
(72) Inventor: MENKE, Cornelis Hendrik Mijndert, NL-2548 NT Den Haag (NL); ANDREOLI, Andrea, I-41123 Modena (MO) (IT)
(74) Representative: V.O.
(86) International application number: PCT/NL2014/050578
(87) International publication number: WO 2015/030582

(56) References cited:
- EP-A1- 1 630 008
- EP-A2- 1 066 991
- US-A- 5 601 180
- US-A1- 2003 040 260
- US-A1- 2004 094 392
- US-B1- 6 612 423

## Description

The invention relates to a conveyor module. The invention further relates to a conveyor mat or chain, a conveyor system, and a method for monitoring wear of a conveyor element.

Such modules, mats or chains, and systems are generally known and are used for conveying products. Usually, the modules are manufactured by means of mold formation. Often, the modules are manufactured from plastic material and/or a metal or metal alloy.

A customary conveyor module comprises a conveying face for supporting articles to be conveyed, the conveying face being located at a top side of the module. At a bottom side of the module, a supporting face is provided, which is arranged to be supported by a support member, such as a conveying track, of a conveyor system. Further, the module comprises connectors arranged such that front and rear sides of successive conveyor modules can be hingedly coupled to each other.

Conveyor modules successive in conveying direction can be coupled to form a modular conveyor mat or chain of a desired length.

Generally, a conveyor system comprises a conveyor mat or conveyor chain, usually of endless design so that it can be led over a conveying track, e.g. by means of return wheels. The mat or chain can for instance be a modular conveying mat.

Normally, a conveyor element, such as a conveyor mat, chain, and/or module, wears during use. At a certain moment, the conveyor element needs to be replaced in order to counteract underperforming of a conveyor system. However, it is difficult to predict when a conveyor element is worn to such extent that it should be replaced, for instance because the wear rate can depend on varying factors, such as for example environment temperature, air humidity, conveying speed, and mass and surface roughness of the articles to be conveyed. Further, interrupting a production process for checking or measuring wear of a conveyor element can be unwanted, especially when such interruptions are more frequent and/or take a relatively long time. Another disadvantage of known conveyor elements may include that it can be difficult to examine whether or not a conveyor element is worn to such extent that it should be replaced. For example, when a top side comprising the conveying face is worn lightly and a supporting face at the bottom side of the module is worn heavily, the module may need to be replaced, but the thickness of the whole module can - due to the relatively light wear at the top side - incorrectly suggest that the module is still in good enough shape. Alternatively, for instance when the conveying and supporting faces both wear substantially equally, it can incorrectly be concluded that one of these faces has worn too much and that the conveyor element needs to be replaced. As a consequence of misjudging the state of wear of conveyor elements, conveyor elements may thus be replaced too early, which can cause unnecessary costs, unnecessary waste, and/or unnecessary shut down of a conveyor system. On the other hand, misjudging can also lead to omission of timely replacement, which can cause underperforming or even break down of a conveyor system. This can have severe consequences. For instance, if no replacement elements are present, a break down can cause long stoppage of production. Alternatively or additionally, a break down may do damage to other parts of a conveyor system and/or to products being conveyed, or may even injure workmen.

It is noted that United States Patent US 5,601,180 discloses a conveyor module, according to the preamble of claim 1, for a conveyor chain having link members, wherein a wear indicator plug is disposed in an upper side of a link member, the upper side of the link member being provided with a plug receiving recess, the wear indicator plug being formed of a material having wear characteristics similar to the material used to construct the link member, the indicator plug being constructed so as to have two or more colored layers each having a predetermined thickness and color variation to indicate the degree to which the conveying surface is worn and thus provide an indication of the need to replace either a single link member or a series of link members.

Further, it is noted that a conveyor mat or a conveyor chain is usually assembled at least partly by coupling a multiple number of conveyor modules to each other in order to form an endless mat or chain. Thereto, a string comprising a plurality of conveyor modules can be pre-assembled, e.g. in a conveyor module factory, for instance in order to limit the assembly time at the location where the conveyor mat or chain is to be installed. In this context, it is noted that a coupling between two of the modules comprised in a single pre-assembled string may be relatively firm and/or relatively lasting with respect to a coupling between two end modules located at respective ends of two separate strings, e.g. by providing said end modules, or so-called couple modules, with different connectors than other modules of the mat or chain. Said connectors of the couple modules may for instance be relatively easily coupleable and/or decoupleable. However, a disadvantage of such modules, mats and/or chains may be that, for instance during pre-assembling said strings and/or during servicing or disassembling the mat or chain, it can be hard to discern the couple modules and the other modules. Hence, e.g. pre-assembling the strings and/or servicing or disassembling the mat or chain, can be relatively difficult, laborious and/or time consuming.

Another disadvantage associated with known conveyor modules is that it can be relatively hard to identify a correct replacement module for a worn and/or damaged module, and, e.g. due to the fact that there are numerous different types of modules on the market.

It can also be relatively hard to tell apart modules of different suppliers and/or manufacturers. This situation can be undesirable, for example, because it can be hard for a user of a conveyor system to assess the quality of conveyor modules currently in use with said system when the supplier and/or manufacturer of said modules are not known.

An object of the invention is to provide an alternative conveyor module, an alternative conveyor mat or chain, and/or an alternative conveyor system. It is an object of the present invention to alleviate or solve at least one of the disadvantages of the prior art, especially a disadvantage mentioned above. In particular, the invention aims at providing a conveyor module, a conveyor mat or chain, a conveyor system and/or method for monitoring wear of a conveyor element, wherein at least one of the disadvantages mentioned above is counteracted or advantages there above are obtained. In embodiments, the invention aims at providing a method for monitoring wear of a conveyor element which is relatively simple and/or relatively sure. In embodiments, the invention aims at providing a conveyor module, conveyor mat or chain, and/or a conveyor system, and/or a method, which can facilitate an relatively untrained workman to make a relatively good judgment whether or not a conveying element is worn to such extent that it should be replaced. In embodiments, the invention aims at providing a conveyor module, conveyor mat or chain, and/or a conveyor system, and/or a method, which can facilitate that a couple module can be discriminated relatively easily from another module for a same conveyor mat or module, which can facilitate that a conveyor element such as module, mat or conveyor can be set apart from a conveyor element from another supplier and/or manufacturer, and/or which can facilitate that a certain module, e.g. a certain replacement module, can be distinguished relatively easily and/or relatively well from a module of a different type.

In a first aspect of a conveyor module of the present invention, the module is suitable for a conveyor mat and/or conveyor chain for conveying articles, and comprises a conveying face for supporting articles to be conveyed, the conveying face being located at a top side of the module, a supporting face arranged to be supported by a support member of a conveyor system, the supporting face being located at a bottom side of the module, and connectors arranged such that front and rear sides of successive conveyor modules can be hingedly coupled to each other, wherein the module further comprises at least two marking bodies for marking of the conveyor module, at least one marking body at the conveying face and at least one marking body at the supporting face, wherein the marking bodies extend substantially from inside the module at least in a direction towards an outer face of the module, wherein the marking bodies are wear indicators for visual inspection of wear of the conveyor module, wherein a first cross-section of the respective wear indicator located at the respective outer face of the conveyor module has a different visual appearance than a second cross-section of the respective wear indicator offset from the first cross-section in the direction into the module, wherein the first cross-section of the respective wear indicator has a different size than the second cross-section of the respective wear indicator, wherein the respective wear indicator has a changing cross-section size, which is changing along the direction in which the second cross-section is offset from the first cross-section, at least a part of the changing being substantially gradually or so-called smoothly.

Preferably, the marking body can extend up to the conveying face and/or supporting face such that an outer surface of the marking body then forms a smooth surface part of the conveying face and/or supporting face of the module. The marking body may substantially wear with the conveying face and/or supporting face.

By arranging the conveyor module such that a marking body extends substantially from inside the module at least in a direction towards, and preferably up to, an outer face of said module, a conveyor module can be provided which can be distinguishable relatively easily when, or even when, the module has worn to a certain extend. For instance, it can thus be facilitated that a mark - e.g. a trade mark, type mark or model mark - can be visible at a module outer surface which is subjected to substantial wear. This can be advantageous with respect to a marking at a surface which is less susceptible to wear, such as a side surface of the module, because such surface can often be hidden from view during use of the module. Furthermore, since the marking body can extend through at least substantial part of the module and may wear with the respective outer face of the module, the marking can be relatively lasting, e.g. with respect to a painted marking or a sticker on an outer surface of the module.

In embodiments, it is possible that the marking body can extend beyond the conveying face and/or the supporting face. For instance, a part of the marking body may then be extending out of the conveying surface. This can increase the friction between the conveying products and the conveyor belt. The marking body may also end before it reaches the conveying face and/or supporting face. For example, an outer surface of the marking body can then remain inside a cavity provided in the module body, but it may still be visible, even when the module is not worn up to the level of the outer surface of the marking body.

The outer surface of the marking body can preferably be located substantially near the center of the conveying face or the supporting face. It is also possible that the outer surface of the marking body is located on the right and/or left side with respect to the center of the conveying face and/or supporting face. Furthermore, it is possible that the module comprises multiple marking bodies.

To have a reliable fixation between the marking body and the module body, the marking body can be an insert that may be pressed into a cavity provided by the module body such that the marking body can be fixedly held inside the cavity, e.g. by means of form closure and/or plastic deformation of the marking body and/or the module body. The marking body may for example remain visible to a person when the module is subjected to wear, even when the module has been worn to a certain extent.

Alternatively, the marking body can be an insert included in an insert-molded conveyor module. The conveyor module body can then be molded around the insert.

The module body may be manufactured from a different material than the marking body. For an user it may then be relatively easy to distinguish the marking body from the conveyor module body. Preferably, the marking body can be manufactured from plastic, whereas the module body can be manufactured from metal.

The marking body may be provided with a color or color scheme being different than a color or color scheme of local material of the conveyor module body adjacent to the marking body such that the marking body and the module body can be distinguished from each other by a person.

In embodiments, cross-sections of the marking body, which cross-sections may be located along at least a part of the path along which the marking body extends at least in the direction towards the outer face of the module, can have substantially the same cross-section contour and/or the same color or color scheme. However, it is also possible that the cross-sections of the marking body may have different visual cross-section contours and/or different colors or color schemes, e.g. depending on the marking purposes of the marking body.

For example, the marking body may indicate the origin of the module. Therefore, when a user has multiple conveyor mats or chains, he can relatively easily determine e.g. the manufacturer of the module. Besides the origin of the module, the marking body may also indicate the type or model of the conveyor mat or conveyor chain, and/or (technical) specifications of the conveyor mat or conveyor chain. Because the marking body may wear with the conveying face or supporting face of the module body, the information provided by the marking body can remain substantially visible to the user.

In embodiments, the marking body may allow the user to easily determine the top side or the bottom side of the module.

The marking body may be also be used to indicate a couple module of an endless conveyor mat or chain. Normally, a number of modules may be coupled to form a string of modules of about 1 to 5 meter, e.g. about 3 meter. This is conventionally done by passing a hinge pin axially through aligned hinge receiving spaces of cooperating hinge loops of consecutive modules. Each pre-assembled string comprising successive modules already hingedly coupled to each other, which may facilitate a user in assembling a conveyer mat or chain. The user can then couple the strings to each other to form an endless conveyor mat or chain, e.g. at the location of the conveyor track. The couple module of each string, normally the first module and/or the last module of the string, can be easily coupled to the next string. For example, connectors of the couple module can be coupled onto the hinge pin of other module of a string and therefore the user may not need many additional tools, such as a hammer, in order to couple the strings of modules to each other. By using the marking body as a couple module indicator, the user can easily detect which modules of the endless conveyor mat or chain are couple modules, and in particular the user can relatively quickly detect a couple module when servicing or dismounting the conveyor mat or chain. The user may then simply dismount the endless modular mat or chain by, for instance, uncoupling the couple module.

The marking bodies are wear indicators for visual inspection of wear of the conveyor module. By providing the module with a wear indicator having different cross-sections with different visual appearances, it can be provided that there is a clear difference between an unworn state of a respective outer face, e.g. a conveying face or a supporting face, and a worn state of said outer face. When the module is unworn, the first cross-section, which can be located at the unworn outer face can namely be visible, whereas the second cross-section, which can be provided below the first cross-section, can be exposed when said outer face of the module is worn to a certain predetermined extent. As a result of the clear difference between the visual appearances of both cross-sections, misjudging the state of wear of conveyor elements can be counteracted. Hence, unnecessary costs, unnecessary waste, unnecessary delay, and/or underperforming or break down of a conveyor system can be counteracted. Besides, due to the different visual appearances, checking a state of wear of an conveyor element may be relatively simple, easy and/or fast, and/or may be even be done without interrupting conveyance of articles.

In a second aspect of the invention, a conveyor mat or conveyor chain according to claim 11 is provided.

In a third aspect of the invention, a method for monitoring wear of a conveyor module or a conveyor mat or conveyor chain according to claim 12 is provided.

In a fourth aspect of the invention, a conveyor system according to claim 14 is provided.

Advantageous embodiments according to the invention are described in the appended claims.

Embodiments will now be described. Some of these embodiments are not part of the invention as they do not fall within the scope of protection of the invention defined by the attached claims. These embodiments which are not part of the invention nevertheless serve the purpose of understanding the invention, and therefore these embodiments, together with embodiments which are part of the invention, will be described with reference to the accompanying figures in which:
Figure 1A shows a schematic perspective, partly cutaway view of a first embodiment of a conveyor module;
Figure 1B shows a schematic perspective, partly cutaway view of another embodiment of a conveyor module;
Figure 1C shows a schematic perspective, partly cutaway view of another embodiment of a conveyor module;
Figure 1D shows a schematic perspective, partly cutaway view of another embodiment of a conveyor module;
Figure 1E shows a schematic perspective view of another embodiment of a conveyor module;
Figure 1F shows a schematic perspective view of an another embodiment of a conveyor module;
Figure 2 shows a schematic perspective bottom view of another embodiment of a conveyor module;
Figure 3A shows a schematic side view of another embodiment of a conveyor module;
Figure 3B shows a schematic side view of another embodiment of a conveyor module, in particular a conveyor module;
Figure 3C shows a schematic side view of another embodiment of a conveyor module; and
Figure 3D shows a schematic side view of another embodiment of a conveyor module.

The embodiments disclosed herein are shown as examples only and should by no means be understood as limiting the scope of the claimed invention in any way. In the description, the same or similar parts and elements have the same or similar reference signs.

In general terms, the present invention can be understood as directed to a conveyor element, such as a conveyor mat or chain, or a module thereof, comprising at least two marking bodies extending from inside the element, at least in a direction to a face subject for marking.

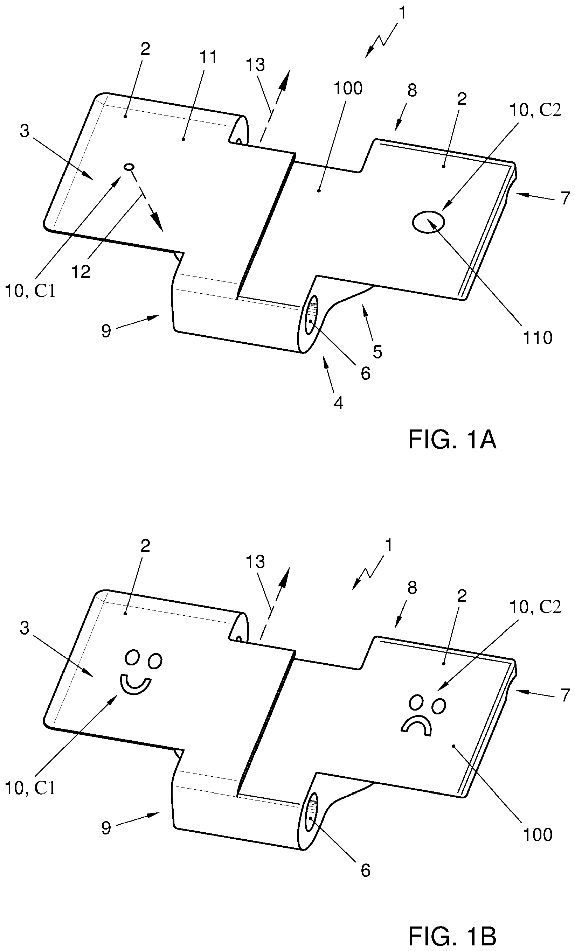

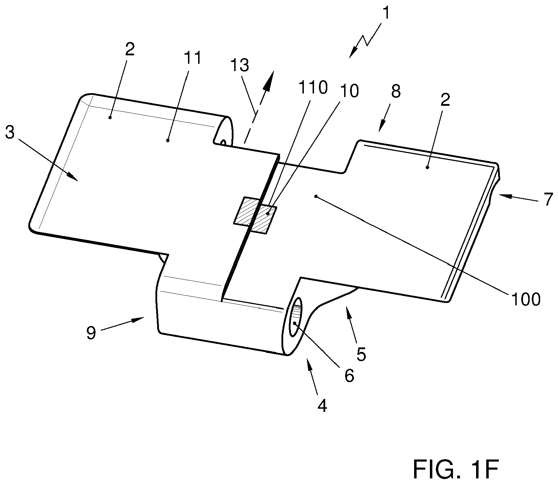

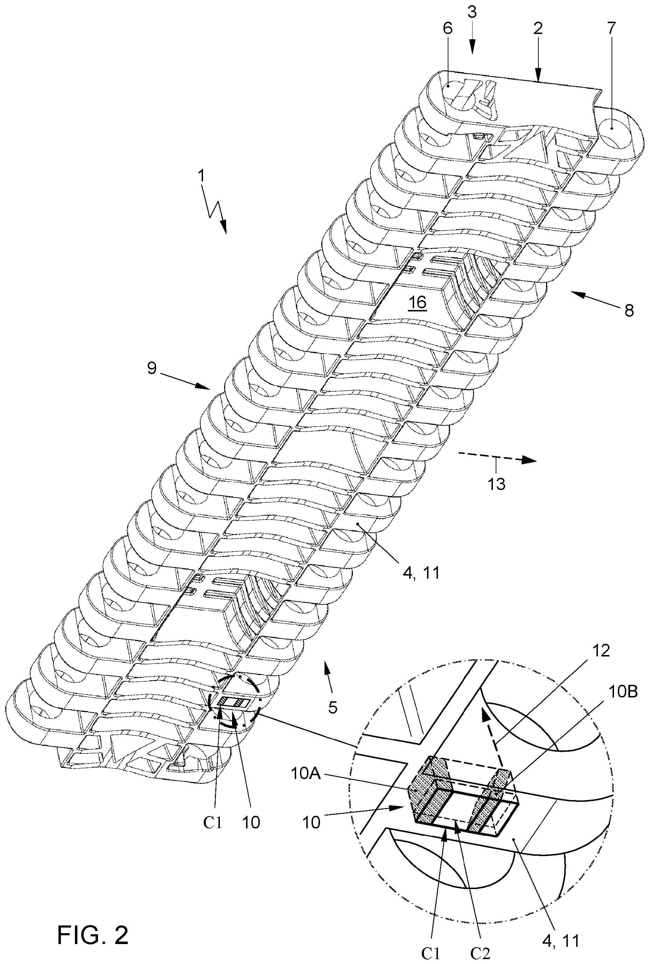

Figures 1A-1D show a schematic perspective, partly cutaway views of embodiments of conveyor modules 1, in which the modules are substantially seen from above. In each of these embodiments, the conveyor module 1 is suitable for a conveyor chain for conveying articles. Additionally or alternatively, such as in the embodiment of figure 2 showing an embodiment of a conveyor module 1, the modules 1 can be suitable for a conveyor mat.

The conveyor module 1 comprises a conveyor module body 100 having a conveying face 2 for supporting articles to be conveyed. The conveying face 2 is located at a top side 3 of the module 1. It is noted that in this description a top side 3 of a module 1, chain or mat has to be understood as at least including but not necessarily limited to a side which during use of said chain or mat or use of an endless chain or mat comprising said module body 100 is facing substantially upward during the conveying upper run and is facing substantially downward during the returning bottom run.

The module body 100 also comprises a supporting face 4 arranged to be supported by a support member of a conveyor system. Advantageously, the supporting face 4 is positioned substantially opposite the conveying face 2.

It is noted that a support member of a conveyor system can be or comprise a conveying track for supporting an upper run of an endless conveyor mat or chain at least partly. Further, a return guide and/or driving means for cooperating with a mat or chain and/or one or more modules thereof can form one or more support members of a conveyor system.

The supporting face 4 of the module body 100 is located at a bottom side 5 of said module 1. Preferably, the supporting face 4 can comprise a substantially flat contact area for slidingly contacting the support member, especially the conveying track and/or return guide.

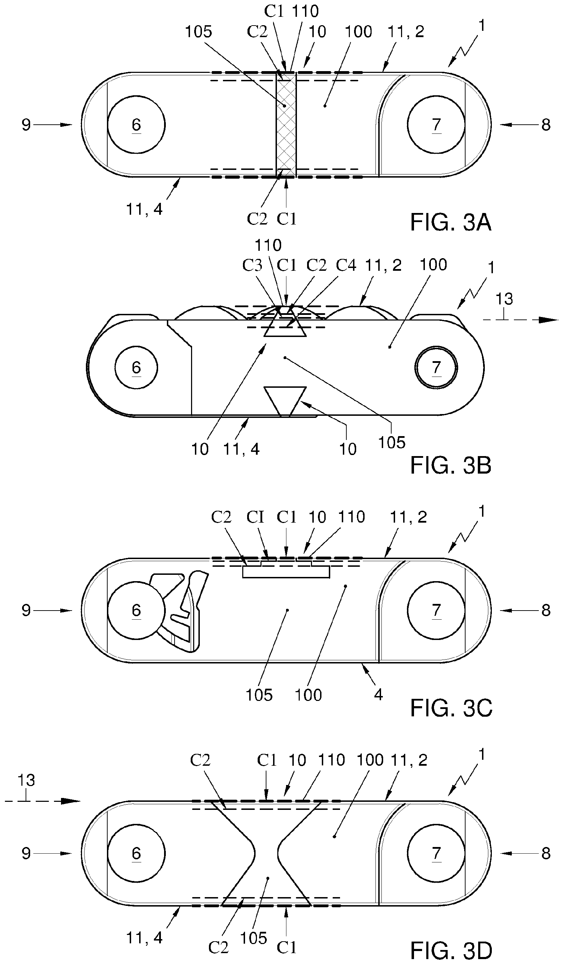

As can be seen in figures 1A-3A, 3C and 3D, the conveying face 2 can comprise a substantially flat contact area for contacting articles to be conveyed supported by the module 1. However, in alternative embodiments, the conveying face 2 may be provided with relief. For example, the conveying face 2 can be provided with recesses and/or protrusions, for instance ribs or tear drops, such as shown in the embodiment of figure 3B, to augment grip. It is noted that the conveying face 2 can extend in a plane substantially parallel with a conveying direction 13, especially substantially parallel with the supporting face 4. However, in embodiments, the conveying face 2 may extend in another direction. For example, when the conveying direction 13 slopes downward or upward, the conveying face 2 can be arranged to extend at an angle with the conveying direction 13 and/or the supporting face 4, such that said conveying face can extend substantially horizontally during the upper run of the mat or chain. Advantageously, the module 1 may be arranged such that during use the conveying face 2 extends substantially in the horizontal plane during the upper run.

The conveyor module body 100 also comprises connectors 6, 7 arranged such that front and rear sides 8, 9 of successive conveyor modules 1 can be hingedly coupled to each other. By connecting the modules 1, an endless conveyor mat or chain can be formed. Here, the connectors 6, 7 comprise hinge holes 6, 7 for cooperation with hinge pins for hingedly connecting successive modules 1. However, in alternative embodiments, the module may alternatively or additionally be provided with other connectors, preferably hinge parts, such as an integrated connector pin protruding from the body part. Here, the module body 100 comprises one first connector hole 6 extending through the module in a direction substantially transverse to a conveying direction 13, and substantially parallel with the conveying face 2 and/or supporting face 4.

In figures 1A-1D, one first connector 6 is provided at the rear side 9 of the module body 100 and two connectors 7 (not shown) are provided at the front side 8 of the module body 100, which can be hingedly connected to the first connector 6 by means of a hinge pin. Alternatively, another number of connectors can be provided at the front or rear side. Preferably, the connectors 6, 7 or so-called coupling elements 6, 7 at both the front and the rear side 8, 9 comprise one or a series of successive hinge parts with one or more adjacent receiving spaces. For example, in case of a module 1 for a conveyor mat, such as for instance shown in figure 2, multiple coupling elements and adjacent receiving spaces are alternating transversely to the conveying direction 13 at both the front as the rear side, so that coupling elements and receiving spaces can interdigitate with receiving spaces and coupling element of similar modules 1 successive in the conveying direction 13. Successive modules 1 can be hingedly coupled by means of hinge pins reaching transversely to the conveying direction 13 through hinge holes 6, 7 provided by the hinge parts 6, 7.

Furthermore, the conveyor module 1 comprises at least two marking bodies 10 for marking the conveyor module 1, at least one marking body 10 at the conveying face 2 and at least one marking body 10 at the supporting face 4. The marking body 10 extends from an inside 105 of the module at least in a direction towards an outer face 11 of the module 1.

Further, the outer face 11 may be a driving face, for instance a driving face for cooperation with driving means, such as teeth of a drive wheel.

In embodiments, such as for instance the embodiment shown in figures 3A, 3B, and 3C, the conveyor module 1 can comprise one or more marking bodies 10 at the conveying face 2 and also one or more marking bodies 10 at the supporting face 4. These at least two marking bodies 10 can be two separate or individual marking bodies 10, see e.g. figure 3C. Alternatively, the at least two marking bodies 10 can be integrated into an integrated or double marking body 10 for marking two different faces 2, 4.

In figures 3A-3D is shown that the respective marking body 10 is arranged such that it is extending substantially to the conveying face 2 and/or supporting face 4. An outer surface 110 of the marking body 10 may extend up to an opening forming an outer border of a cavity that is provided in the module body 100 such that the outer surface 110 of the marking body 10 substantially forms part of the conveying face 2 and/or supporting face 4 of the module 1. Hence, the marking body 10 may be clearly visible.

Alternatively, the outer surface 110 can be located inside 105 the module body, but may be still visible in the cavity provided in the module body 100. Hence, there may be small recesses on the conveying face 2 and/or supporting face 4. It is also possible that the marking body 10 may extend beyond the opening of the cavity provided in the module body 100. Hence, the outer surface 110 of the marking body 10 may form a small protrusion on the conveying and/or supporting face.

In embodiments, the marking body 10 can be an insert, preferably a pre-fab marking body 10. Advantageously, a conveyor module, mat or chain can be provided with a cavity, and the marking body 10 may be placed into the cavity provided by the module body 100. Preferably, the marking body 10 is fixed in said hole, e.g. by adhering, gluing, form closure or soldering or other suitable means. Additionally or alternatively, when the marking body 10 is pressed into the cavity, the marking body 10 and/or the module body may deform such that the marking body 10 can be clamped into the cavity.

Further, the insert may be included in an insert-molded conveyor module by firstly providing said insert in a mold and subsequently molding the conveyor module body 100 substantially around said insert. An advantage of an insert-molded conveyor module may be that the three-dimensional shape of the marking body can be chosen such that the marking body 10 can be locked-up in the conveyor module body 100, i.e. the marking body 10 can have a non-releasing shape, such as for instance a flattened cone-shape as shown in figure 3B or a diabolo-shape or hourglass-shape as shown in figure 3D.

Alternatively to inserting a prefab marking body, the marking body 10 can be formed inside a cavity or hole provided in the module, mat or chain, e.g. by pouring, casting, molding and/or sintering it in said hole. The hole may for instance be made by drilling or milling, and may have any suitable shape. For instance, the hole can be a blind hole or a through hole. It is noted that the marking body 10 can be formed in multiple steps, for instance, by pouring a material having a first color into the hole, and subsequently forming a further part of the marking body 10, e.g. by pouring a material having another color into said hole on top of the material having the first color.

The marking body 10 can be made of and/or comprise any suitable material or materials, such as a plastic, metal and/or metal alloy.

In embodiments, the marking body 10 can be made of and/or comprise a material being substantially as durable as the material of the conveyor element surrounding it. Preferably, the material or materials of the marking body may be or comprises a different material than the local material of the conveyor module body adjacent to the marking body. For example, the marking body 10 may be manufactured from plastic and the adjacent material of the module body may be manufactured from metal or metal alloy, or vice versa.

Alternatively, the material or materials of the marking body 10 may be or comprise the same material or materials as at least the surrounding parts of the conveyor element. For example, the marking body 10 and the conveyor module body 100 can both comprise the same or a similar plastic, or a same or similar metal or metal alloy.

The marking body 10 may have a hardness substantially equal to the hardness of the material of the conveyor element surrounding it. However, in alternative embodiments, the material of the marking body 10 and the surrounding material may have a different degrees of hardness, i.e. the material of the marking body 10 can have a lower or higher hardness than the surrounding material.

The marking body 10 may have a different color or color scheme than a color or color scheme of local material of the conveyor module body 100 adjacent to the marking body 10.

During use of the module 1, the marking body 10 may have a visual appearance of a symbol such as a dot "O", or a triangle "▲" or a square "□", which symbol may for example be filled with color, for instance, red. In embodiments, the marking body 10 may for example be located substantially near the center of the conveying face 2 and/or supporting face 4.

In embodiments, cross-sections of the elongated marking body 10, which cross-sections may be located along at least a part of the path along which the marking body 10 extends at least in the direction towards the outer face 11 of the module 1, can have substantially the same cross-section contour and/or substantially the same color or color scheme.

It is, however, noted that the marking body 10 is not limited to the abovementioned shapes and the like and can have different shapes and/or colors and/or locations and/or changing cross-sections along the path the marking body 10 extends, e.g. depending on its marking purposes.

For instance, the marking body 10 may indicate the origin of the conveyor mat or conveyor chain. Text and/or logo representing a manufacturer can then be pressed into one or more cavities provided by the module body 100. The text can also contain (technical) specifications of the conveyor mat or conveyor chain.

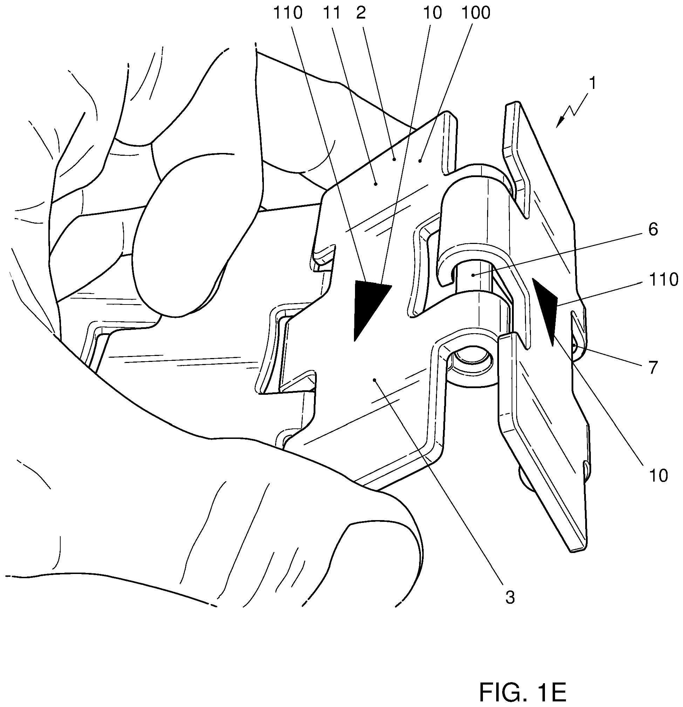

Alternatively, the marking body 10 may be, for example, a couple module indicator for indicating which modules of the conveyor mat or conveyor chain are couple modules. As shown in fig. 1E, the marking body 10 may for example have a visual appearance of a symbol such as a triangle, and preferably at least one triangle that is pointed to another adjacent module. Additionally or alternatively, the marking body 10 may also comprise a text, such as for example: "COUPLE MODULE".

The marking bodies 10 are wear indicators 10 for visual inspection of wear of the conveyor module 1. The respective wear indicator 10 can be arranged such that the conveyor module 1 looks differently when it is substantially worn than when it is not worn or not worn that much.

The respective wear indicator 10 is arranged such that a first cross-section C1 of the wear indicator 10 located at said outer face 11 of the conveyor module 1 has a different visual appearance than a second cross-section C2 of the wear indicator 1 offset from the first cross-section C1 in the direction 12 into the module 1.

Figures 1A-1D show schematic perspective, partly cutaway views of conveyor modules 1. At the right-hand side of these figures, a top layer of the module 1 is cutaway up to the level of the second cross-section C2, here corresponding with a worn state of the conveying face 2, whereas at the left-hand side of the same figures, no parts of the modules 1 are cutaway. At the left-hand sides of each of these modules 1, an unworn part of the conveying face 2 is visible, including the first cross-section C1 of the respective wear indicator 10.

For explanatory reasons, the conveying faces 2 of the modules 1 of figs. 1A-1D have been provided with the same wear indicator 10 twice, one at the left-hand side of which the first cross-section C1 is visible and one at the right-hand side of which the corresponding second cross-section C2 is visible. As can be seen, these two cross-sections C1, C2 of a same wear indicator 10 look different, i.e. have different visual appearance, such that an unworn state of the respective outer face 11, here the conveying face 2, can be distinguished visually from a worn state of said outer face 11. However, in other embodiments, a respective outer face 11 subject to wear may be provided with another number of wear indicators, for instance one, three or four wear indicators 10.

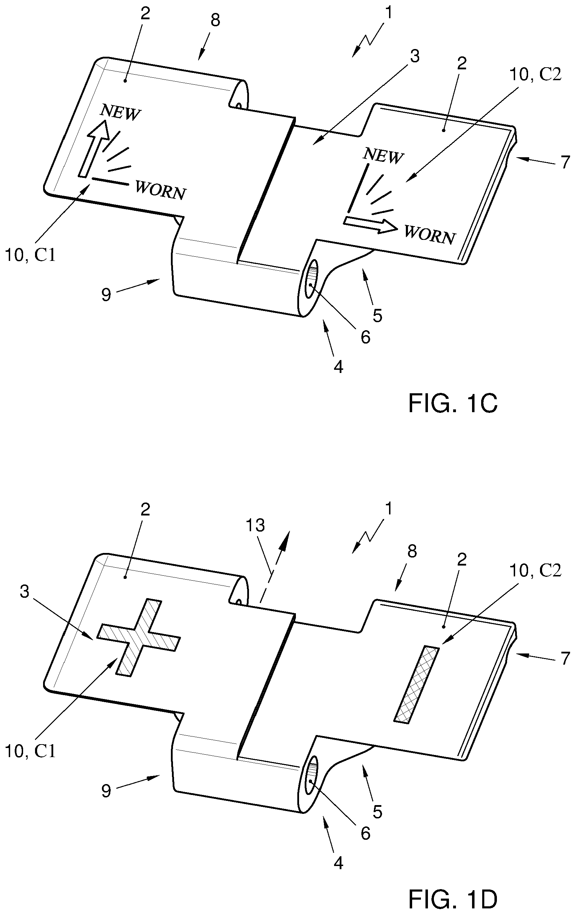

The two cross-section C1, C2 have a different visual appearance, at least partly due to mutually different sizes of said wear indicator cross-sections C1, C2, such as is shown e.g. in figure 1A. Here in figure 1A, both cross-sections have substantially the same form or so-called shape, but in alternative embodiments, the cross-sections can, additionally to having a different size, have different forms or shapes, such as for instance shown in figure 1D.

Advantageously, for instance in case of visual inspection of the state of wear of the outer surface 11 by a human observer, the visual appearance of the first cross-section C1 can be associative with an unworn conveyor module 1, and the visual appearance of the second cross-section C2 can associative with a worn conveyor module 1. For example, such as shown in figure 1D, the first cross-section C1 can be provided with a color associative with an unworn state, such as the color green, white, black or blue, whereas the second cross-section C2 can be provided with a color associative with a worn state, preferably a color substantially opposite to the color of the first cross-section, such as the color red, black, white or yellow. Such as shown in the embodiment of figure 1D, the first and/or second cross-section C1, C2 can be provided with a single color. However, in alternative embodiments, one or both cross-sections can be provided with multiple colors. Said multiplicity of colors may form a color scheme being different from the color or color scheme of other cross-section.

In the embodiments shown in figures 1A-1D, each of the first and second cross-sections C1, C2 is provided with a color or color scheme being different than a color or color scheme of local material of the conveyor module 1 adjacent to the wear indicator 10. However, in embodiments, the color or color scheme of at least a part of one of said cross-sections C1, C2 can be substantially equal or similar to the color or color scheme of said local material of the module 1. When for instance only the second cross-section C2 is provided with a color contrasting with its surroundings, the wear indicator 10 can be not substantially visually noticeable until the respective outer surface 11 is worn to such extent that said second cross-section C2 will be exposed due to wear off of the part of the wear indicator 10 including the first cross-section C1 previously covering said second cross-section C2, which thereby can indicate that the module 1 or the mat or chain needs to be replaced.

Alternatively or additionally its colors, the form or shape of the cross-sections, especially a text and/or figure such as a symbol, may be associative with unworn and worn states, respectively. For example, the first cross-section C1 of the wear indicator 10 can be shaped such as to be associative with "fresh", "continuing", "good", "positive" and/or "safe", and may comprise a symbol, such as for instance a happy smiley " :) " or a plus sign " + " or a thumbs up symbol, and/or text, such as "OK", "SAFE" or "NEW". On the other hand, the second cross-section C2 of the wear indicator 10 can be shaped such as to be associative with "wear", "stopping", "bad", "negative" and/or "danger", and may comprise a symbol, such as for instance a thumbs down symbol or an unhappy smiley " : (" or a minus sign " - ", and/or text, such as "STOP", "WORN" or "REPLACE".

In embodiments, the orientation of the form or shape of one or both cross-sections, especially a text and/or figure such as a symbol, can be such that it can be read relatively easily when looking at the conveyor mat or chain from the side, such as is the case with the minus sign shown in figure 1D. Alternatively or additionally, the orientation of the form of one or both cross-sections can be chosen differently. For instance, the form can be oriented such as to be read easily when looking onto a mat or chain substantially in a direction in which the wear indicator is moving away from an observer, as can be seen in figures 1B and 1C, or a direction in which the wear indicator is approaching the observer. Seen in a direction transverse to the outer face 11, a bottom side of the form may thus be substantially facing a lateral side of a mat, chain and/or module 1, such as in figure 1D, a front side 8, or a rear side 9, such as in figures 1B and 1C.

The first cross-section C1 of the wear indicator 10 can thus have a different form than the second cross-section C2 of the wear indicator 10, for example by providing it with a different contour, as is the case with the minus symbol and the plus symbol in figure 1D.

At least a part of the form of the first cross-section C1 and at least a part of the form of the second cross-section C2 can be oriented differently with respect to the outer face 11. For example, the form of the second cross-section or part thereof is turned with respect to the first cross-section. In figure 1C, an embodiment is shown having a first cross-section C1 in which an arrow is pointing in a first direction, towards a text and/or symbol associative with an unworn state, and having a second cross-section C2 in which a differently oriented arrow is pointing in a second direction, towards a text and/or symbol associative with a worn state.

It is noted that the wear indicator 10 comprises intermediate cross-sections having a visual appearance and cross-section size other than the visual appearances and cross-section sizes of the first and second cross-sections C1, C2.

In the embodiment of figure 1C the orientation of the arrow can be in between the orientation of the arrows corresponding with the first and second cross-sections.

Additionally to the size, or additionally to the size and the orientation, another aspect of the shape or form such as the contour, and/or the color or color scheme of one or multiple intermediate cross-sections may be different from the first and second cross-sections C1, C2, preferably in such a manner that the visual appearance of said intermediate cross-section CI forms a visually intermediate step between the first and second appearance, which may be associative with a semi-worn state of the conveyor module 1.

Figures 3A-3D show schematic side views of further embodiments of conveyor modules in their unworn states.

As can be seen in figs. 3B and 3D, which show embodiments of conveyor modules, the wear indicators 10 have, according to an aspect of the invention, a visual appearance which is changing along the direction 12 in which the second cross-section C2 is offset from the first cross-section C1. According to the invention, the respective wear indicator 10 has a changing cross-section size, and may additionally have a changing contour and/or color or color scheme, which is changing along said direction 12. Part of said change, can be substantially at once, such as the direct color change of the wear indicator in figure 3A. Alternatively or additionally, the change or part thereof is substantially gradually or so-called smoothly, such as in case of the smooth change in size of the diameter of consecutive cross-sections in figs. 3B and 3D. Additionally, part of the changing can be substantially step-by-step, such as in the exemplary embodiment of figure 3C.

As noted above, it is apparent that the wear indicator 10 has more than two different cross-sections. For example, one or multiple intermediate cross-sections CI can be provided between the first and second cross-section, as is shown in figure 3C. Additionally or alternative, the wear indicator 10 can comprise one or multiple further cross-sections C3, C4 provided deeper into the conveyor module than the second cross-section C2, which may have another visual appearance than the first and second cross-sections, which visual appearance can be associative with a state of wear beyond a normal worn state, for instance a state of high risk and/or danger. It is noted that the one or more further cross-sections C3, C4 of the wear indicator 10 can be shaped such as to be associative with "excessive wear" or "danger", and may for instance comprise a symbol, such as for instance a skull and/or text, such as "DANGER" or "STOP".

The invention also relates to a conveyor mat or conveyor chain, preferably a modular mat or chain comprising a series of successive modules which are hingedly coupled, such as with the aid of hinge pins reaching through cooperating hinge openings 6, 7 of adjacent modules, wherein at least one of the module is according to the invention. However, the mat or chain may alternatively be a substantially non-modular mat or chain provided with at least two marking bodies 10. It is noted that each of the features of a marking body 10, e.g. a wear indicator, described above in the context of a conveyor module 1 for a modular conveyor mat and/or chain may also be applied with a non-modular mat or chain. The mat or chain comprises a conveying face for supporting articles to be conveyed, a supporting face arranged to be supported by a support member of a conveyor system, and at least two marking bodies 10 for marking the mat or chain, the respective marking body 10 extending substantially from inside 105 the conveyor mat or conveyor chain or a module thereof at least in a direction towards the outer face 2,4 of the mat or chain or module 1 thereof.

Further, the invention relates to a method for monitoring wear of a conveyor element, such as a modular conveyor mat and/or conveyor chain, and/or a conveyor module 1. The method comprises visually observing an outer surface 11 of the conveyor element. The observing may be done by a human observer and/or can be executed by a non-human observer or apparatus, such as a camera or camera system. The method further comprises detecting one or more of at least two wear indicators 10 included in the conveyor element, the respective wear indicator 10 extending from an outer face 11 of the element in a direction 12 into the element, and being arranged such that a first cross-section C1 of the wear indicator 10 located at said outer face 11 has a different visual appearance and size than a second cross-section C2 of the wear indicator 10 offset from the first cross-section C1 in the direction 12 into the conveyor element. For instance, the at least one of the at least two wear indicators 10 may be detected by detecting a color differing from a color of material surrounding the wear indicator 10. A present state of visual appearance of the one or more wear indicators 10 is observed and said observed present state is compared with a predetermined state of visual appearance, such as a state corresponding with a worn conveyor element. For example, the observed size, color, shape and/or orientation of the wear indicator can be compared with a predetermined size, color, shape and/or orientation that corresponds with an un-worn state of conveyor element and/or it may be compared with a predetermined size, color, shape and/or orientation that corresponds with a worn state. Hence, it can be concluded whether the conveyor element is still suitable for use or is worn to such extend that it is desirable to replace it. Alternatively or additionally, a visual appearance of the present state of the visual appearance of the one or more wear indicators 10 can included a mutual distance between two or more wear indicators 10, provided in a single or in different modules 1, or between two or more parts of a single wear indicator 10, such as for instance shown in figure 2.

At the left-hand side of figure 2, an unworn conveyor module 1 is shown having a relatively small wear indicator 10 which includes at least two mutually offset parts 10A, 10B that are both visibly noticeable with respect to the surrounding material in a first cross-section C1 of said wear indicator 10. At a detail showing said wear indicator 10 at the right-hand side of figure 2, it can be seen that visible portions of both parts 10A, 10B come to lie further apart as the outer face 11, here the supporting face 4, wears. Although such a small visible change between a first and a second cross section C1, C2 may perhaps not be visible well enough for a human observer, such a small difference may be well recognizable by a system provided with a camera. Although the two parts 10A, 10B are here shown as being offset in the conveying direction 13, different parts of the wear indicator 10 can advantageously be offset in a direction substantially transverse to the conveying direction 13, seen in a direction transverse to the respective outer surface 11, such that the conveying speed will not affect the observed mutual distance between said two parts 10A, 10B.

It is noted that the at least two parts are here integrated in a single wear indicator 10 which can be a single insert, but that the two parts can alternatively be formed by two separate indicators and/or inserts.

In embodiments, the method can further comprise the step of generating a warning signal when the comparison turned out that the observed present state of visual appearance of the at least one wear indicator 10 corresponds or does not correspond with a predetermined state of visual appearance. For instance, when the observed state does correspond with a predetermined state corresponding with a worn conveyor element, or when the observed state does not correspond with a predetermined state corresponding with an un-worn conveyor element, the warning signal may be generated. The warning signal can for instance comprise a visual and/or audible signal, and/or may include a data signal, such as a signal for automatically stopping the conveyor element, e.g. by activating a brake and/or by deactivating a drive or actuator for driving the conveyor element and/or a mat or chain in which said element may be included.

In embodiments, a conveyor system comprising a conveyor element, such as a conveyor module and/or a conveyor mat or chain as described above, can be arranged for executing the above described method for monitoring wear of said conveyor element.

In the conveyor system, one or more cameras can be arranged and positioned for visually observing one or more outer surfaces 11 of the conveyor element. For example, when wear of the conveying face 2 is to be monitored or checked, the camera can be located above un upper side of a top run, preferable a free part of the top run not conveying articles, or below the bottom run. Alternatively or additionally, a camera may be located such as to observe a supporting face 4 of the conveyor element, for instance a substantially upward facing supporting face 4 of the returning bottom run. Further, the system can comprise an electronic circuit arranged for obtaining data from the at least one camera, the data corresponding to a present state of visual appearance of the one or more wear indicators 10 observed by the at least one camera, the electronic circuit further being arranged for comparing said data with data corresponding to a predetermined state of visual appearance.

It is noted that the wear indicator cannot only be used for monitoring and/or detecting wear of one or more outer faces 11 subject to wear, such as conveying and/or supporting faces 2, 4, but may alternatively or additionally be used for monitoring, checking, and/or detecting wear of connectors 6, 7, such as wear of hinge holes 6, 7 and/or hinge pins and/or detecting increase of play between two or more succeeding conveyor modules 1. For example, when is detected that the mutual distance between tow wear indicators 10 each provided in another one of two conveyor modules 1 has increased, this may indicate that one or more of the connectors via which these modules are connected are worn.

The invention is not restricted to the embodiments described above. It will be understood that many variants are possible.

For example, the conveyor module 1 shown in the exemplary embodiments, each merely consists of a molded body part 100 comprising the conveying and supporting faces 2, 4 and the connectors 6, 7 and the at least one marking body, or consists of a molded body part 100 and a therein provided marking body, e.g. a wear indicator 10. However, in alternative embodiments of a conveyor module according to the invention, the module 1 and/or its module body 100 may comprise one or more additional parts. For example, the conveying face 2 can partly or completely be formed by a conveying part, attached to an upper side of the body part. The conveying part, e.g. a substantially plate-shaped part, may be relatively rigid and/or wear-resistant with respect to the body part, especially a molded body part, and may for instance be made of a metal of metal alloy.

Further, it is noted that an offset distance between the first and the second cross-sections can correspond with a thickness of a top layer of the respective outer face which may wear off before the conveyor element should be replaced. For instance depending on the maximum tolerable wear and/or the thickness of the conveyor element, the second cross-section can for example be positioned between 0.5 mm and 10 mm, especially between 1 mm and 5 mm, below the first cross-section provided by the outer face of an unworn conveyor element.

These and other embodiments will be apparent to the person skilled in the art, the scope of protection of the invention being defined by the following claims.

## Claims

1. A conveyor module (1) for a conveyor mat and/or conveyor chain for conveying articles, comprising a conveyor module body (100) having:
a conveying face (2) for supporting articles to be conveyed, the conveying face being located at a top side (3) of the module (1);
a supporting face (4) arranged to be supported by a support member of a conveyor system, the supporting face (4) being located at a bottom side (5) of the module (1); and
connectors (6, 7) arranged such that front and rear sides (8, 9) of successive conveyor modules can be hingedly coupled to each other, **characterized in that** the module (1) further comprises:
at least two marking bodies (10) for marking of the conveyor module, at least one first marking body (10) at the conveying face (2) and at least one second marking body (10) at the supporting face (4), wherein the marking bodies extend substantially from inside (105) the module at least in a direction towards an outer face (2, 4, 11) of the module, wherein the marking bodies (10) are wear indicators (10) for visual inspection of wear of the conveyor module (1), wherein a first cross-section (C1) of the respective wear indicator (10) located at the respective outer face (2, 4, 11) of the conveyor module has a different visual appearance than a second cross-section (C2) of the respective wear indicator offset from the first cross-section (C1) in the direction into the module, wherein the first cross-section of the respective wear indicator (10) has a different size than the second cross-section of the respective wear indicator (10), wherein the respective wear indicator (10) has a changing cross-section size, which is changing along the direction in which the second cross-section (C2) is offset from the first cross-section (C1), at least a part of the changing being substantially gradually or so-called smoothly.

2. The conveyor module according to claim 1,
wherein the at least two marking bodies (10) are integrated into an integrated or double marking body (10) for marking two different faces (2, 4); or
wherein the at least two marking bodies (10) comprise separate or individual marking bodies.

3. The conveyor module according to claims 1 or 2,
wherein the at least two marking bodies (10) extend substantially up to at least one outer face (11), e.g. the at least one first marking body extends substantially up to the conveying face (2) and/or the at least one second marking body extends substantially up to the supporting face (4) of the module body; and/or
wherein the at least two marking bodies (10) are inserts, especially inserts pressed into cavities provided in the module body; and/or
wherein the at least two marking bodies (10) are inserts included in an insert-molded conveyor module (1) such that the conveyor module body (100) is, at least partially, molded around the inserts; and/or
wherein the at least two marking bodies (10) are held into cavities provided in the module body in form closure and/or by plastic deformation.

4. The conveyor module (1) according to any one of the preceding claims,
wherein the at least two marking bodies (10) are provided with a material being different than a local material of the conveyor module body (100) adjacent to the respective marking body (10); and/or
wherein the module body (100) is manufactured from and/or comprises metal; and/or
wherein the at least two marking bodies (10) are manufactured from and/or comprises plastic.

5. The conveyor module (1) according to any one of the preceding claims,
wherein the at least two marking bodies (10) are provided with a color or color scheme being different than a color or color scheme of local material of the conveyor module body (100) adjacent to the respective marking body; and/or
wherein the different cross-sections (C1, C2) of the at least two marking bodies, which cross-sections are located along at least a part of the path along which the respective marking body extends at least in the direction towards the outer face of the module, have substantially the same cross-section contour and/or color or color scheme; and/or
wherein the conveyor module (1) is a couple module and at least one of the marking bodies (10) is a couple module indicator for indicating that the module is a couple module of a conveyor mat or conveyor chain.

6. The conveyor module (1) according to any one of the preceding claims,
wherein the first cross-section (C1) of the respective wear indicator (10) has a different form than the second cross-section (C2) of the respective wear indicator (10); and/or
wherein the form of the first cross-section (C1) of the respective wear indicator (10) has a different contour than the second cross-section (C2) of the respective wear indicator (10).

7. The conveyor module (1) according to any one of the preceding claims, wherein at least a part of the form of the first cross-section (C1) and at least a part of the form of the second cross-section (C2) are oriented differently with respect to the outer face, especially wherein the form of the second cross-section is turned with respect to the first cross-section.

8. The conveyor module (1) according to any one of the preceding claims, wherein the first cross-section (C1) of the wear indicators (10) is provided with a color or color scheme being different than a color or color scheme of the second cross-section (C2) of the respective wear indicator (10).

9. The conveyor module (1) according to any one of the preceding claims, wherein the wear indicators (10) have a changing cross-section contour and/or color or color scheme, which is changing along the direction in which the second cross-section is offset from the first cross-section, at least a part of the changing being substantially gradually or so-called smoothly, step-by-step, and/or substantially at once.

10. The conveyor module (1) according to any one of the preceding claims, wherein the connectors (6, 7) comprise hinge holes (6, 7) for receiving hinge pins for hingedly coupling front and rear sides (8, 9) of successive conveyor modules (1) to each other.

11. A conveyor mat or conveyor chain, preferably a modular mat or chain comprising a series of successive modules (1) of which at least one module (1) is according to any one of the preceding claims 1-10 which successive modules (1) are hingedly coupled, especially with the aid of hinge pins reaching through cooperating hinge openings (6, 7) of adjacent modules (1), the mat or chain comprising:
a conveying face (2) for supporting articles to be conveyed;
a supporting face (4) arranged to be supported by a support member of a conveyor system; and
at least two marking bodies (10) for marking the conveyor mat or conveyor chain or a module (1) thereof, at least one marking body (10) at the conveying face (2) and at least one marking body (10) at the supporting face (4), wherein the respective marking body (10) extends substantially from inside the conveyor mat or conveyor chain or a module thereof at least in a direction towards a respective outer face (2, 4, 11) of the mat or chain or a module (1) thereof, wherein the marking bodies are wear indicators (10) for visual inspection of wear of the conveyor module, wherein a first cross-section (C1) of the respective wear indicator (10) located at the outer face (2, 4, 11) of the conveyor module (1) has a different visual appearance than a second cross-section (C2) of the respective wear indicator (10) offset from the first cross-section (C1) in the direction into the module (1), wherein the first cross-section (C1) of the respective wear indicator (10) has a different size than the second cross-section (C2) of the respective wear indicator, wherein the respective wear indicator (10) has a changing cross-section size, which is changing along the direction in which the second cross-section (C2) is offset from the first cross-section (C1), at least a part of the changing being substantially gradually or so-called smoothly.

12. A method for monitoring wear of a conveyor mat or conveyor chain, according to claim 11, or a conveyor module (1) according to any one of the claims 1-10, the method comprising the steps of:
visually observing an outer surface (2, 4, 11) of the conveyor mat or chain or module;
detecting one or more of the at least two wear indicators (10) included in the conveyor mat or chain or module;
observing a present state of visual appearance of the respective one or the respective ones of the at least two wear indicators (10); and
comparing said observed present state with a predetermined state of visual appearance, such as a state corresponding with a worn conveyor mat or chain or module.

13. The method according to claim 12, further comprising the step of generating a warning signal when the comparison turned out that the observed present state of visual appearance of the respective wear indicator (10) corresponds or does not correspond with the predetermined state of visual appearance, such as the state corresponding with a worn conveyor mat or chain or module.

14. A conveyor system, comprising a conveyor module (1) according to any one of claims 1-10 or a conveyor mat or chain according to claim 11.

15. The conveyor system according to claim 14, further comprising:
a camera arranged and positioned for visually observing an outer surface of the conveyor mat or chain or module; and
an electronic circuit arranged for obtaining data from the camera, the data corresponding to a present state of visual appearance of the one or more marking bodies (10), e.g. wear indicators (10), observed by the camera, the electronic circuit further being arranged for comparing said data with data corresponding to a predetermined state of visual appearance, such as a state corresponding with a worn conveyor mat or chain or module.

## Patentansprüche

1. Fördermodul (1) für eine Fördermatte und/oder Förderkette zum Fördern von Gegenständen, umfassend einen Fördermodulkörper (100) mit:
eine Förderfläche (2) zum Tragen von zu befördernden Gegenständen, wobei sich die Förderfläche an einer Oberseite (3) des Moduls (1) befindet;
eine Tragfläche (4), die angeordnet ist, um von einem Tragelement eines Fördersystems getragen zu werden, wobei sich die Tragfläche (4) an einer Unterseite (5) des Moduls (1) befindet; und
Verbinder (6, 7), die so angeordnet sind, dass vordere und hintere Seite (8, 9) aufeinanderfolgender Fördermodule miteinander gelenkig verbunden werden können, **dadurch gekennzeichnet** das Modul (1) ferner umfasst:
wenigstens zwei Markierungskörper (10) zum Markieren des Fördermoduls, wenigstens einen ersten Markierungskörper (10) an der Förderfläche (2) und wenigstens einen zweiten Markierungskörper (10) an der Tragfläche (4), wobei sich die Markierungskörper im Wesentlichen von der Innenseite (105) des Moduls wenigstens in einer Richtung zu einer Außenfläche (2, 4, 11) des Moduls erstrecken, wobei die Markierungskörper (10) Verschleißindikatoren (10) zur visuellen Prüfung des Verschleißes des Fördermoduls (1) sind, wobei ein erster Querschnitt (C1) des jeweiligen Verschleißindikators (10), der sich an der jeweiligen Außenfläche (2, 4, 11) des Fördermoduls befindet, ein anderes optisches Erscheinungsbild aufweist als ein zweiter Querschnitt (C2) des jeweiligen Verschleißindikators, der von dem ersten Querschnitt (C1) in Richtung in das Modul versetzt ist, wobei der erste Querschnitt des jeweiligen Verschleißindikators (10) eine andere Größe als der zweite Querschnitt des jeweiligen Verschleißindikators (10) aufweist, wobei der jeweilige Verschleißindikator (10) eine sich ändernde Größe des Querschnitts aufweist, die sich entlang der Richtung ändert, in der der zweite Querschnitt (C2) von dem ersten Querschnitt (C1) versetzt ist, wobei wenigstens ein Teil der Änderung im Wesentlichen graduell oder sozusagen gleichmäßig ist.

2. Fördermodul nach Anspruch 1,
wobei die wenigstens zwei Markierungskörper (10) in einen integrierten oder doppelten Markierungskörper (10) zum Markieren von zwei verschiedenen Flächen (2, 4) integriert sind; oder
wobei die wenigstens zwei Markierungskörper (10) getrennte oder einzelne Markierungskörper umfassen.

3. Fördermodul nach Anspruch 1 oder 2,
wobei sich die wenigstens zwei Markierungskörper (10) im Wesentlichen bis zu wenigstens einer Außenfläche (11) erstrecken, z. B. erstreckt sich der wenigstens eine erste Markierungskörper im Wesentlichen bis zur Förderfläche (2) und/oder der wenigstens ein zweiter Markierungskörper erstreckt sich im Wesentlichen bis zur Tragfläche (4) des Modulkörpers; und/oder
wobei die wenigstens zwei Markierungskörper (10) Einsätze sind, insbesondere Einsätze, die in Hohlräume gedrückt werden, die in dem Modulkörper vorgesehen sind; und/oder
wobei die wenigstens zwei Markierungskörper (10) Einsätze sind, die in einem einsatzgeformten Fördermodul (1) enthalten sind, so dass der Fördermodulkörper (100) wenigstens teilweise um die Einsätze und/oder geformt ist
wobei wenigstens zwei Markierungskörper (10) in Hohlräumen gehalten werden, die in dem Modulkörper in Form eines Verschlusses und/oder durch plastische Verformung vorgesehen sind.

4. Fördermodul (1) nach einem der vorhergehenden Ansprüche, wobei die wenigstens zwei Markierungskörper (10) mit einem Material versehen sind, das sich von einem lokalen Material des Fördermodulkörpers (100) neben dem jeweiligen Markierungskörper unterscheidet (10); und/oder
wobei der Modulkörper (100) aus Metall hergestellt ist und/oder Metall umfasst; und/oder
wobei die wenigstens zwei Markierungskörper (10) aus Kunststoff hergestellt sind und/oder Kunststoff umfassen.

5. Fördermodul (1) nach einem der vorhergehenden Ansprüche, wobei die wenigstens zwei Markierungskörper (10) mit einer Farbe oder einem Farbschema versehen sind, die sich von einer Farbe oder einem Farbschema des lokalen Materials des Fördermodulkörpers (100) neben dem jeweiligen Markierungskörper unterscheiden; und/oder
wobei die unterschiedlichen Querschnitte (C1, C2) der wenigstens zwei Markierungskörper, deren Querschnitte sich entlang wenigstens eines Teils des Weges befinden, entlang dem sich der jeweilige Markierungskörper wenigstens in Richtung zur Außenfläche des Moduls erstreckt, im Wesentlichen die gleiche Querschnittskontur und/oder Farbe oder das gleiche Farbschema haben; und/oder
wobei das Fördermodul (1) ein Paarmodul ist und wenigstens einer der Markierungskörper (10) ein Paarmodulindikator ist, um anzuzeigen, dass das Modul ein Paarmodul einer Fördermatte oder einer Förderkette ist.

6. Fördermodul (1) nach einem der vorhergehenden Ansprüche,
wobei der erste Querschnitt (C1) des jeweiligen Verschleißindikators (10) eine andere Form hat als der zweite Querschnitt (C2) des jeweiligen Verschleißindikators (10); und/oder
wobei die Form des ersten Querschnitts (C1) des jeweiligen Verschleißindikators (10) eine andere Kontur aufweist als der zweite Querschnitt (C2) des jeweiligen Verschleißindikators (10).

7. Fördermodul (1) nach einem der vorhergehenden Ansprüche, wobei wenigstens ein Teil der Form des ersten Querschnitts (C1) und wenigstens ein Teil der Form des zweiten Querschnitts (C2) in Bezug auf die Außenfläche unterschiedlich ausgerichtet sind, insbesondere wobei die Form des zweiten Querschnitts in Bezug auf den ersten Querschnitt gedreht ist.

8. Fördermodul (1) nach einem der vorhergehenden Ansprüche, wobei der erste Querschnitt (C1) der Verschleißindikatoren (10) mit einer Farbe oder einem Farbschema versehen ist, das sich von einer Farbe oder einem Farbschema des zweiten Querschnitts (C2) des jeweiligen Verschleißindikators (10) unterscheidet.

9. Fördermodul (1) nach einem der vorhergehenden Ansprüche, wobei die Verschleißindikatoren (10) eine sich ändernde Querschnittskontur und/oder Farbe oder ein Farbschema aufweisen, das sich entlang der Richtung ändert, in der der zweite Querschnitt von dem ersten Querschnitt versetzt ist, wobei wenigstens ein Teil der Änderung im Wesentlichen stufenweise oder sozusagen gleichmäßig, graduell und/oder im Wesentlichen gleichzeitig ist.

10. Fördermodul (1) nach einem der vorhergehenden Ansprüche, wobei die Verbinder (6, 7) Scharnierlöcher (6, 7) zum Aufnehmen von Scharnierstiften zum gelenkigen Verbinden der vorderen und hinteren Seite (8, 9) von aufeinanderfolgenden Fördermodulen (1) miteinander umfassen.

11. Fördermatte oder Förderkette, vorzugsweise eine modulare Matte oder Kette, umfassend eine Reihe aufeinanderfolgender Module (1), von denen wenigstens ein Modul (1) einem der vorhergehenden Ansprüche 1 bis 10 entspricht, wobei die aufeinanderfolgenden Module (1) gelenkig verbunden sind, insbesondere mit Hilfe von Scharnierstiften, die durch zusammenwirkende Scharnieröffnungen (6, 7) von benachbarten Modulen (1) reichen, wobei die Matte oder Kette umfasst:
eine Förderfläche (2) zum Tragen von zu befördernden Gegenständen;
eine Tragfläche (4), die so angeordnet ist, dass sie von einem Tragelement eines Fördersystems getragen wird; und
wenigstens zwei Markierungskörper (10) zum Markieren der Fördermatte oder Förderkette oder eines Moduls (1) davon, wenigstens einen Markierungskörper (10) an der Förderfläche (2) und wenigstens einen Markierungskörper (10) an der Tragfläche (4), wobei sich der jeweilige Markierungskörper (10) im Wesentlichen von der Innenseite der Fördermatte oder Förderkette oder eines Moduls davon wenigstens in einer Richtung zu einer jeweiligen Außenfläche (2, 4, 11) der Matte oder Kette oder einem Modul (1) davon erstreckt, wobei die Markierungskörper Verschleißindikatoren (10) zur visuellen Prüfung des Verschleißes des Fördermoduls sind, wobei ein erster Querschnitt (C1) des jeweiligen Verschleißindikators (10), der sich an der Außenfläche (2, 4, 11) des Fördermoduls (1) befindet, ein anderes optisches Erscheinungsbild als ein zweiter Querschnitt (C2) des jeweiligen Verschleißindikators (10) aufweist, der von dem ersten Querschnitt (C1) in Richtung in das Modul (1) versetzt ist, wobei der erste Querschnitt (C1) des jeweiligen Verschleißindikators (10) eine andere Größe als der zweite Querschnitt (C2) des jeweiligen Verschleißindikators aufweist, wobei der jeweilige Verschleißindikator (10) eine sich ändernde Größe des Querschnitts aufweist, die sich entlang der Richtung ändert, in der der zweite Querschnitt (C2) von dem ersten Querschnitt (C1) versetzt ist, wobei wenigstens ein Teil der Änderung im Wesentlichen graduell oder sozusagen gleichmäßig ist.

12. Verfahren zum Überwachen des Verschleißes einer Fördermatte oder Förderkette nach Anspruch 11 oder eines Fördermoduls (1) nach einem der Ansprüche 1 bis 10, wobei das Verfahren die Schritte umfasst:
visuelles Beobachten einer Außenfläche (2, 4, 11) der Fördermatte oder -kette oder des Moduls;
Erfassen eines oder mehrerer der wenigstens zwei Verschleißindikatoren (10), die in der Fördermatte oder -kette oder dem Modul enthalten sind;
Beobachten eines gegenwärtigen Zustands des optischen Erscheinungsbilds des jeweiligen oder der jeweiligen der wenigstens zwei Verschleißindikatoren (10); und
Vergleichen des beobachteten gegenwärtigen Zustands mit einem vorbestimmten Zustand des optischen Erscheinungsbilds, wie einem Zustand, der einer verschlissenen Fördermatte oder Kette oder einem Modul entspricht.

13. Verfahren nach Anspruch 12, ferner umfassend den Schritt des Erzeugens eines Warnsignals, wenn sich herausstellte, dass der beobachtete gegenwärtige Zustand des optischen Erscheinungsbilds des jeweiligen Verschleißindikators (10) dem vorbestimmten Zustand des optischen Erscheinungsbilds entspricht oder nicht entspricht, wie dem Zustand, der einer verschlissenen Fördermatte oder Kette oder einem Modul entspricht.

14. Fördersystem, umfassend ein Fördermodul (1) nach einem der Ansprüche 1 bis 10 oder eine Fördermatte oder -kette nach Anspruch 11.

15. Fördersystem nach Anspruch 14, ferner umfassend:
eine Kamera, die zum visuellen Beobachten einer Außenfläche der Fördermatte oder -kette oder des Moduls angeordnet und positioniert ist; und
eine elektronische Schaltung, die zum Erhalten von Daten von der Kamera angeordnet ist, wobei die Daten einem gegenwärtigen Zustand des visuellen Erscheinungsbilds des einen oder der mehreren Markierungskörper (10) entsprechen, z. B. Verschleißindikatoren (10), die von der Kamera beobachtet werden, wobei die elektronische Schaltung ferner zum Vergleichen der Daten mit Daten angeordnet ist, die einem vorbestimmten Zustand des optischen Erscheinungsbilds entsprechen, wie einem Zustand, der einer verschlissenen Fördermatte oder Kette oder einem Modul entspricht.

## Revendications

1. Module transporteur (1) pour un tapis transporteur et/ou une chaîne transporteuse pour transporter des articles, comprenant
un corps de module transporteur (100) ayant : une face de transport (2) pour supporter des articles à transporter, la face de transport étant située à un côté supérieur (3) du module (1) ;
une face de support (4) agencée pour être supportée par un élément de support d'un système transporteur, la face de support (4) étant située au niveau de un côté inférieur (5) du module (1) ; et
des connecteurs (6, 7) disposés de telle sorte que les côtés avant et arrière (8, 9) des modules de convoyage successifs peuvent être couplés l'un à l'autre par charnière,
**caractérisé en ce que** le module (1) comprend en outre :
au moins deux corps de marquage (10) pour le marquage du module transporteur, au moins un premier corps de marquage (10) au niveau de la face de transport (2) et au moins un deuxième corps de marquage (10) au niveau de la face de support (4), les corps de marquage s'étendant sensiblement de l'intérieur (105) le module au moins dans une direction vers une face extérieure (2, 4, 11) du module, dans lequel les corps de marquage (10) sont des indicateurs d'usure (10) pour une inspection visuelle de l'usure du module transporteur (1), dans lequel une première section transversale (C1) de l'indicateur d'usure respectif (10) situé au niveau de la face extérieure respective (2, 4, 11) du module transporteur a un aspect visuel différente de celle d'une deuxième section transversale (C2) de l'indicateur d'usure respectif décalé de la première section transversale (C1) dans la direction du module, dans lequel le premier la section transversale de l'indicateur d'usure respectif (10) a une taille différente de la deuxième section transversale de l'indicateur d'usure respectif (10), dans lequel l'indicateur d'usure respectif (10) a une taille de section transversale changeante, qui change le long la direction dans lequel la deuxième section transversale (C2) est décalée de la première section transversale (Cl), au moins une partie du changement étant sensiblement graduellement ou c'est-à-dire progressivement.

2. Module transporteur selon la revendication 1,
dans lequel les au moins deux corps de marquage (10) sont intégrés dans un corps de marquage intégré ou double (10) pour marquer deux faces différentes (2, 4); ou
dans lequel les au moins deux corps de marquage (10) comprennent des corps de marquage séparés ou individuels.

3. Module transporteur selon les revendications 1 ou 2,
dans lequel les au moins deux corps de marquage (10) s'étendent sensiblement jusqu'à au moins une face extérieure (11), par exemple l'au moins un premier corps de marquage s'étend sensiblement jusqu'à la face de transport (2) et/ou l'au moins un deuxième corps de marquage s'étend sensiblement jusqu'à la face de support (4) du corps de module ; et/ou
dans lequel les au moins deux corps de marquage (10) sont des pièces rapportées, en particulier des pièces rapportées pressées dans des cavités prévues dans le corps de module ; et / ou
dans lequel les au moins deux corps de marquage (10) sont des pièces rapportées incluses dans un module de transporteur surmoulé (1) de telle sorte que le corps de module de transporteur (100) est, au moins partiellement, moulé autour des pièces rapportées ; et / ou
dans lequel les au moins deux corps de marquage (10) sont maintenus dans des cavités prévues dans le corps de module par coopération de formes et/ou par déformation plastique.

4. Module transporteur (1) selon l'une quelconque des revendications précédentes,
dans lequel les au moins deux corps de marquage (10) sont prévus pour être d'un matériau différent d'un matériau local du corps de module transporteur (100) adjacent au respectif corps de marquage (10) ; et/ou
dans lequel le corps de module (100) est fabriqué à partir et/ou comprend du métal; et/ou dans lequel les au moins deux corps de marquage (10) sont fabriqués à partir et/ou comprennent du plastique.

5. Module transporteur (1) selon l'une quelconque des revendications précédentes,
dans lequel les au moins deux corps de marquage (10) sont prévus avec 'une couleur ou un jeu de couleurs différent d'une couleur ou d'un jeu de couleurs du matériau local du module transporteur (100) adjacent au corps de marquage respectif; et / ou
dans lequel les différentes sections transversales (C1, C2) des au moins deux corps de marquage, ces sections transversales étant situées le long d'au moins une partie du chemin le long duquel le corps de marquage respectif s'étend au moins dans la direction vers la face externe du module, ont sensiblement le même contour de section transversale et/ou couleur ou jeu de couleurs; et / ou
dans lequel le module transporteur (1) est un module de couplage et au moins l'un des corps de marquage (10) est un indicateur de module de couplage pour indiquer que le module est un module de couplage d'un tapis ou d'une chaîne transporteur.

6. Module transporteur (1) selon l'une quelconque des revendications précédentes,
dans lequel la première section transversale (C1) de l'indicateur d'usure respectif (10) a une forme différente de la deuxième section transversale (C2) de l'indicateur d'usure (10) respectif ; et/ou
dans lequel la forme de la première section transversale (C1) de l'indicateur d'usure respectif (10) a un contour différent de la deuxième section transversale (C2) de l'indicateur d'usure respectif (10).

7. Module transporteur (1) selon l'une quelconque des revendications précédentes, dans lequel au moins une partie de la forme de la première section transversale (C1) et au moins une partie de la forme de la deuxième section transversale (C2) sont orientés différemment par rapport à la face externe, en particulier dans lequel la forme de la deuxième section transversale est tournée par rapport à la première section transversale.

8. Module transporteur (1) selon l'une quelconque des revendications précédentes, dans lequel la première section transversale (C1) des indicateurs d'usure (10) est pourvue d'une couleur ou d'un jeu de couleurs différent d'une couleur ou d'un jeu de couleurs de la deuxième section transversale (C2) de l'indicateur d'usure respectif (10).

9. Module transporteur (1) selon l'une quelconque des revendications précédentes, dans lequel les indicateurs d'usure (10) ont un contour de section transversale et/ou une couleur ou un schéma de couleurs changeants, qui changent le long de la direction dans lequel la deuxième section transversale est décalée par rapport à la première section transversale, au moins une partie du changement étant sensiblement graduellement ou c'est à dire en douceur, étape par étape et/ou sensiblement à la fois.

10. Module transporteur (1) selon l'une quelconque des revendications précédentes, dans lequel les connecteurs (6, 7) comprennent des trous d'articulation (6, 7) pour recevoir des axes d'articulation pour coupler de manière articulée les côtés avant et arrière (8, 9) de modules transporteur successifs (1) les uns aux autres.

11. Tapis ou chaîne transporteur, de préférence un tapis ou une chaîne modulaire comprenant une série de modules successifs (1) dont au moins un module (1) est selon l'une quelconque des revendications 1 à 10 précédentes, les modules successifs (1) étant couplés par charnière, en particulier à l'aide d'axes de charnière s'étendant à travers les ouvertures de charnière coopérantes (6, 7) de modules adjacents (1), le tapis ou la chaîne comprenant :
une face de transport (2) pour supporter les articles à transporter ;
une face de support (4) agencée pour être supportée par un élément de support d'un système transporteur ; et
au moins deux corps de marquage (10) pour marquer le tapis de transport ou la chaîne de transport ou un module (1) de ceux-ci, au moins un corps de marquage (10) au niveau de la face de transport (2) et au moins un corps de marquage (10) au niveau de la face de support (4), dans lequel le corps de marquage respectif (10) s'étend sensiblement depuis l'intérieur du tapis de transport ou de la chaîne de transport ou un module de ceux-ci au moins dans une direction vers une face extérieure respective (2, 4, 11) du tapis ou chaîne ou d'un module (1) de ceux-ci, dans lequel les corps de marquage sont des indicateurs d'usure (10) pour une inspection visuelle de l'usure du module transporteur, dans lequel une première section transversale (C1) de l'indicateur d'usure respectif (10) située à la face extérieure (2, 4, 11) du module transporteur (1) a un aspect visuel différent de celle d'une deuxième section transversale (C2) de l'indicateur d'usure respectif (10) décalé de la première section transversale (C1) dans la direction dans le module (1), dans lequel la première section transversale (C1) de l'indicateur d'usure respectif (10) a une taille différente de la deuxième section transversale (C2) de l'indicateur d'usure respectif, dans lequel l'indicateur d'usure respectif (10) a une taille de section transversale changeante, qui change le long de la direction dans laquelle la deuxième section transversale (C2) est décalée de la première section transversale (Cl), au moins une partie du changement étant sensiblement graduellement ou c'est à dire en douceur.

12. Procédé pour surveiller l'usure d'un tapis ou d'une chaîne transporteur, selon la revendication 11, ou d'un module transporteur (1) selon l'une quelconque des revendications 1 à 10, le procédé comprenant les étapes consistant à :
observer visuellement une surface extérieure (2, 4, 11) du tapis ou de la chaîne ou du module transporteur ;
détecter un ou plusieurs des au moins deux indicateurs d'usure (10) inclus dans le tapis ou la chaîne ou le module transporteur ;
observer un état actuel d'aspect visuel de l'un respectif ou de ceux respectifs des au moins deux indicateurs d'usure (10) ; et
comparer ledit état actuel observé avec un état d'aspect visuel prédéterminé, tel qu'un état correspondant à un tapis ou une chaîne ou un module transporteur usé.

13. Procédé selon la revendication 12, comprenant en outre l'étape de génération d'un signal d'avertissement lorsque la comparaison s'est avérée que l'état actuel d'aspect visuel observé de l'indicateur d'usure respectif (10) correspond ou ne correspond pas à l'état prédéterminé de l'aspect visuel, telle que l'état correspondant à un tapis ou une chaîne ou un module transporteur usé.

14. Système transporteur, comprenant un module transporteur (1) selon l'une quelconque des revendications 1 à 10 ou un tapis ou une chaîne transporteur selon la revendication 11.

15. Système transporteur selon la revendication 14, comprenant en outre :
une caméra agencée et positionné pour observer visuellement une surface extérieure du tapis, de la chaîne ou du module transporteur ; et
un circuit électronique agencé pour obtenir des données de la caméra, les données correspondant à un état actuel d'aspect visuel du ou des corps de marquage (10), par exemple les indicateurs d'usure (10), observés par la caméra, le circuit électronique étant en outre agencé pour comparer lesdites données avec des données correspondant à un état d'aspect visuel prédéterminé, tel qu'un état correspondant à un tapis, une chaîne ou un module transporteur usé.
